**Europäisches Patentamt**

**European Patent Office**

**Office européen des brevets**

(19)

(11) Veröffentlichungsnummer: **0 156 115**
**B1**

(12) **EUROPÄISCHE PATENTSCHRIFT**

(45) Veröffentlichungstag der Patentschrift:
**16.03.88**

(51) Int. Cl.⁴: **F 16 B 13/10**

(21) Anmeldenummer: **85100887.0**

(22) Anmeldetag: **29.01.85**

(54) **Spreizdübel.**

(30) Priorität: **28.03.84 DE 3411431**

(43) Veröffentlichungstag der Anmeldung:
**02.10.85 Patentblatt 85/40**

(45) Bekanntmachung des Hinweises auf die Patenterteilung:
**16.03.88 Patentblatt 88/11**

(84) Benannte Vertragsstaaten:
**AT BE CH FR GB IT LI NL**

(56) Entgegenhaltungen:
**DE-A-2 004 162**
**DE-A-2 510 274**
**DE-A-3 109 275**
**DE-A-3 208 266**

(73) Patentinhaber: **fischerwerke Artur Fischer GmbH & Co. KG, Weinhalde 14- 18, D-7244 Tumlingen/Waldachtal 3 (DE)**

(72) Erfinder: **Fischer, Artur, Dr. h. c., Weinhalde 34, D-7244 Waldachtal 3/Tumlingen (DE)**

EP 0 156 115 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Spreizdübel für die Verankerung in vorzugsweise konisch nach innen erweitert hergestellten Bohrlöchern, bestehend aus einem am Bohrlochgrund abzustützenden, einen Spreizkonus aufweisenden, mit Mitteln zum Befestigen eines Gegenstandes ausgestatteten Stehbolzen, auf dessen Spreizkonus eine Spreizhülse auftreibbar ist.

Bei den bekannten Spreizdübeln der obengenannten Art weist der Stehbolzen ein Innen- oder Außengewinde auf, so daß durch Eindrehen einer Schraube bzw. Aufdrehen einer Mutter als Gegenlager zur Verspannung eines Gegenstandes an einer Bauwerksfläche entsteht. Aus Zeitersparnisgründen wird jedoch bei Serienmontagen angestrebt, die Schraubenmontage durch eine Schlagmontage zu ersetzen, wobei jedoch die Verankerung insbesondere in der Decke Sicherheitsansprüchen genügen muß. Ein für die Schlagmontage vorgesehener Spreizdübel ist aus der DE-A-2 510 274 bekannt, jedoch wird bei diesem Spreizdübel ein zusätzliches Verbindungselement in Form eines Drahtes benötigt, um eine Verbindung zwischen Spreizhülse und Stehbolzen zu erzielen.

Der Erfindung liegt daher die Aufgabe zugrunde, einen Spreizdübel zu schaffen, mit dem eine sichere Befestigung eines Gegenstandes in einfacher Weise durch Schlagmontage durchführbar ist.

Erfindungsgemäß wird dies dadurch erreicht, daß der Stehbolzen einen den zu befestigenden Gegenstand zu überragen bestimmten, mit einer Aufspaltung versehenen Abschnitt aufweist, dessen beide durch die Aufspaltung gebildeten Segmente umbördelbar sind.

Zur Verankerung des erfindungsgemäßen Spreizdübels wird dieser in das vorbereitete Bohrloch soweit eingesetzt, bis der Stehbolzen auf dem Bohrlochgrund aufsitzt. Bei der Deckenmontage ist es vorteilhaft, das Bohrloch im Bereich des Bohrlochgrundes mit einer Hinterschneidung zu versehen, in die die Spreizlamellen der Spreizhülse beim auftreiben auf den Spreizkonus des Stehbolzens eingreifen. Damit wird eine Verankerung erreicht, deren Haltewert selbst bei Rißbildung im Beton nur unwesentlich vermindert wird. Nach der Verankerung wird der zu befestigende Gegenstand auf den mit der Aufspaltung versehenen Abschnitt des Stehbolzens aufgeschoben. Durch Aufkeilen des den Gegenstand überragenden Abschnittes beispielsweise mittels eines Hilfswerkzeuges, Schraubendrehers oder dgl. werden die beiden durch die Aufspaltung gebildeten Segmente auseinandergedrückt und anschließend durch Hammerschläge umgebördelt. Damit entsteht ein die Verspannung des zu befestigenden Gegenstandes bewirkendes Gegenlager.

In einer weiteren Ausgestaltung der Erfindung kann das eine Segment gegenüber dem anderen verkürzt sein. Diese Maßnahme erlaubt das Umbördeln der beiden Segmente ohne Hilfswerkzeug. Das längere Segment wird als erstes mit dem Hammer rechtwinklich abgebogen. Danach kann das kürzere Segment ebenfalls mit dem Hammer in die entgegengesetzte Richtung umgebördelt werden.

In einer weiteren Ausgestaltung der Erfindung kann die Außenwandung der Segmente mit parallel zum Aufspaltungsgrund verlaufenden Kerben versehen sein. Die Kerben dienen als Knickpunkte, um das Umbördeln zu erleichtern.

In der Zeichnung sind Ausführungsbeispiele der Erfindung dargestellt.

Es zeigen:

Figur 1 den im Bohrloch eingesetzten Spreizdübel

Figur 2 die Befestigung einer Drahtabhängung

Figur 3 die Befestigung einer Holzlatte

Figur 4 die Ausbildung des Stehbolzens mit unterschiedlich langen Segmenten.

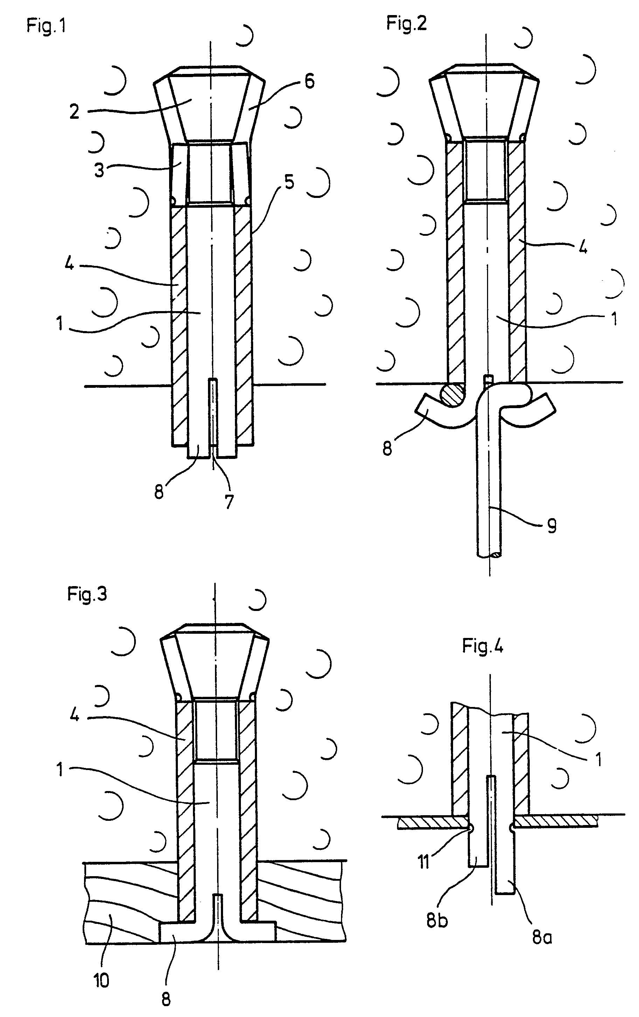

Der Spreizdübel besteht aus dem Stehbolzen 1 mit kegelförmigem Spreizkonus 2 und der über einen Teil ihrer Länge mit Längsschlitzen 3 versehenen Spreizhülse 4. Das den Spreizdübel aufnehmende Bohrloch 5 weist im Bereich des Bohrlochgrundes eine konisch nach innen sich erweiternde Hinterschneidung 6 auf, die mit einem dafür geeigneten Bohrgerät hergestellt ist. Der die Mauerwerksoberfläche überragende Abschnitt des Stehbolzens 1 ist mit einer Aufspaltung 7 versehen, die den Abschnitt in zwei Segmente 8 teilt. Ober diesen Abschnitt wird nach der Verankerung des Spreizdübels durch Auftreiben der Spreizhülse 4 auf den Spreizkonus 2 des Stehbolzens 1 der zu befestigende Gegenstand - in Figur 2 ist dies die Öse einer Drahtabhängung 9 - übergestülpt. Danach werden die beiden Segmente 8 des Abschnittes gegebenenfalls unter Zuhilfenahme eines Schraubendrehers oder dgl. auseinandergebogen und mit Hammerschlägen umgebördelt. Damit ist eine feste Verspannung der Drahtöse erreicht.

In gleicher Weise erfolgt auch die Verspannung einer Holzlatte 10, wobei die Spreizhülsenlänge auf die Dicke der Holzlatte so abgestimmt ist, daß die Segmente 8 bündig mit der Außenfläche der Holzlatte 10 umbördelbar sind.

Die beiden Segmente 8a, 8b des Stehbolzens 1 gemäß Figur 4 weisen eine unterschiedliche Länge auf. Damit besteht die Möglichkeit, nur mit Hilfe eines Hammers zunächst das längere Segment 8a durch Schläge auf die Innenseite des Segmentes rechtwinklig umzubiegen. Danach ist es auch möglich, das kürzere Segment 8b ebenfalls durch Schläge auf die Innenseite in die entgegengesetzte Richtung umzubördeln. Bei dieser Lösung erübrigt sich die Verwendung eines Werkzeuges zum Auseinanderdrücken der beiden Segmente. Ferner können an der Außenwandung der Segmente 8 parallel zum Aufspaltungsgrund verlaufende Kerben 11 vorgesehen sein, die den Knickpunkt bestimmen und das Umbiegen erleichtern.

## Patentansprüche

1. Spreizdübel für die Verankerung in vorzugsweise konisch nach innen erweitert hergestellten Bohrlöchern, bestehend aus einem am Bohrlochgrund abzustützenden, einen Spreizkonus aufweisenden, mit Mitteln zum Befestigen eines Gegenstandes ausgestatteten Stehbolzen, auf dessen Spreizkonus eine Spreizhülse auftreibbar ist, dadurch gekennzeichnet, daß der Stehbolzen einen den zu befestigenden Gegenstand zu überragen bestimmten, mit einer Aufspaltung versehenen Abschnitt aufweist, dessen beide durch die Aufspaltung gebildete Segmente entgegengesetzt umbördelbar sind.

2. Spreizdübel nach Anspruch 1, dadurch gekennzeichnet, daß das eine Segment gegenüber dem anderen verkürzt ist.

3. Spreizdübel nach Anspruch 1, dadurch gekennzeichnet, daß die Außenwandung der Segmente mit parallel zum Aufspaltungsgrund verlaufenden Kerben versehen ist.

## Claims

1. Expansible plug for anchoring in drilled holes, preferably those that are made to widen inwards in a conical manner, comprising a stud bolt which is supported at the base of the drilled hole, has an expander cone and is equipped with means for securing an object, and onto the expander cone of which an expansible sleeve can be driven, characterised in that the stud bolt has a portion that is designed to project beyond the object to be secured and is provided with a slot, and the two segments of which portion, which are formed by the slot, can be bent over in opposite directions.

2. Expansible plug according to claim 1, characterised in that one segment is shorter than the other.

3. Expansible plug according to claim 1, characterised in that the outer wall of the segments is provided with notches that extend parallel to the base of the slot.

## Revendications

1. Cheville à expansion destinée à l'ancrage dans des trous percés, de préférence coniquement élargis vers l'intérieur, cheville constituée par un boulon s'appuyant sur le fond du trou, présentant un cône d'expansion, muni de moyens destinés à la fixation d'un objet, une douille d'expansion pouvant être poussée sur le cône d'expansion du boulon, cheville caractérisée en ce que le boulon présente une partie destinée à dépasser de l'objet à fixer, et munie d'une fente, les deux segments que cette fente forme pouvant être rabattus dans des directions opposées.

2. Cheville à expansion selon la revendication 1, caractérisée en ce qu'un segment est plus court que l'autre.

3. Cheville à expansion selon la revendication 1, caractérisée en ce que la paroi extérieure des segments est munie d'entailles qui s'étendent parallèlement au fond de la fente.

Fig.1  Fig.2  Fig.3  Fig.4